# FASCICULE DE BREVET EUROPEEN

(11) **EP 4 478 691 B1**
(45) Date de publication et mention de la délivrance du brevet: **22.10.2025**
(21) Numéro de dépôt: 24177421.5
(22) Date de dépôt: 22.05.2024
(51) Int. Cl.: H04M 1/02, H04M 11/02, H04N 7/18, H04M 9/02

(54) **INTERPHONE**
GEGENSPRECHANLAGE
INTERPHONE

(30) Priorité: 16.06.2023 FR 2306237
(43) Date de publication de la demande: 18.12.2024
(73) Titulaire: Cogelec, 85290 Mortagne-sur-Sèvre (FR)
(72) Inventeur: LECLERC, Roger, 85130 LES LANDES GENUSSON (FR)
(74) Mandataire: INNOV-GROUP

(56) Documents cités:
- WO-A1-2019/001336
- CN-A- 107 800 995
- CN-A- 111 724 525
- CN-U- 203 966 221

## Description

L'invention concerne un interphone.

Des interphones connus comportent une paroi métallique présentant une face avant exposée à l'extérieur. Cette paroi métallique est suffisamment épaisse pour rendre l'interphone robuste vis-à-vis de certains actes de vandalisme. En particulier, cette paroi métallique a pour vocation d'empêcher qu'on puisse accéder, sans autorisation, aux circuits électroniques de l'interphone qui se trouvent derrière cette paroi métallique.

Cette paroi métallique comporte également différentes ouvertures traversantes pour recevoir les différents éléments de l'interphone qui doivent être accessibles et utilisables depuis l'extérieur. Par exemple, un clavier et l'objectif d'une caméra peuvent être reçus dans de telles ouvertures traversantes. De part leur intégration dans ces ouvertures traversantes de la paroi métallique, ces éléments se trouvent directement exposés à l'extérieur. Ils sont donc soumis aux intempéries et souvent exposés au rayonnement solaires. Pour les protéger, notamment des intempéries, une visière est fixée sur la paroi métallique juste au-dessus de l'ouverture à travers laquelle l'élément à protéger est accessible depuis l'extérieur.

Ces interphones connus comportent aussi une antenne pour établir une liaison de transmission d'informations avec un combiné audiophonique d'un résident par l'intermédiaire d'un réseau de télécommunication sans-fil. Il est connu de placer cette antenne à l'extérieur du boîtier de l'interphone. En effet, lorsqu'elle est située à l'intérieur de l'interphone, la paroi métallique de l'interphone forme un écran qui rend difficile la réception des ondes électromagnétiques. Par contre, le fait de placer l'antenne à l'extérieur du boîtier de l'interphone complexifie sa fabrication et/ou son installation. De plus, l'antenne est alors plus vulnérable vis-à-vis des actes de vandalisme car elle est facilement identifiable et accessible depuis l'extérieur.

Par exemple, un tel interphone connu est divulgué dans la demande CN217508756U. Le déposant connaît aussi une solution qui consiste à placer l'antenne dans un boîtier externe déporté mécaniquement indépendant du boîtier de l'interphone et à relier ce boîtier externe à celui de l'interphone par une liaison filaire. Cela présente l'avantage de permettre de placer l'antenne à un emplacement difficilement accessible depuis l'extérieur. Par contre la fabrication et l'installation de l'interphone s'en trouve complexifiées.

De l'état de la technique est également connu de : CN111724525A, WO2019/001336A1 et CN107800995A.

L'invention vise à remédier à cet inconvénient en proposant un interphone plus simple à fabriquer ou à installer.

L'invention est exposée dans le jeu de revendications joint.

L'invention sera mieux comprise à la lecture de la description qui va suivre, donnée uniquement à titre d'exemple non limitatif et faite en se référant aux dessins sur lesquels :
- la figure 1 est une illustration schématique d'un système d'interphonie,
- la figure 2 est une illustration schématique des différents éléments d'un interphone du système de la figure 1,
- la figure 3 est une illustration, en perspective, d'une face avant de l'interphone de la figure 2,
- la figure 4 est une illustration de différentes grandeurs physiques mesurables sur l'interphone de la figure 2,
- la figure 5 est une illustration, partielle et en perspective, de l'interphone de la figure 2,
- la figure 6 est une illustration, en coupe verticale, d'une visière de l'interphone de la figure 2.

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description un exemple détaillé de mode de réalisation est d'abord décrit dans un chapitre I en référence aux figures. Ensuite, dans un chapitre II, des variantes de ce mode de réalisation sont introduites. Enfin, les avantages des différents modes de réalisation sont précisés dans un chapitre III.

### Chapitre I : Exemple de mode de réalisation

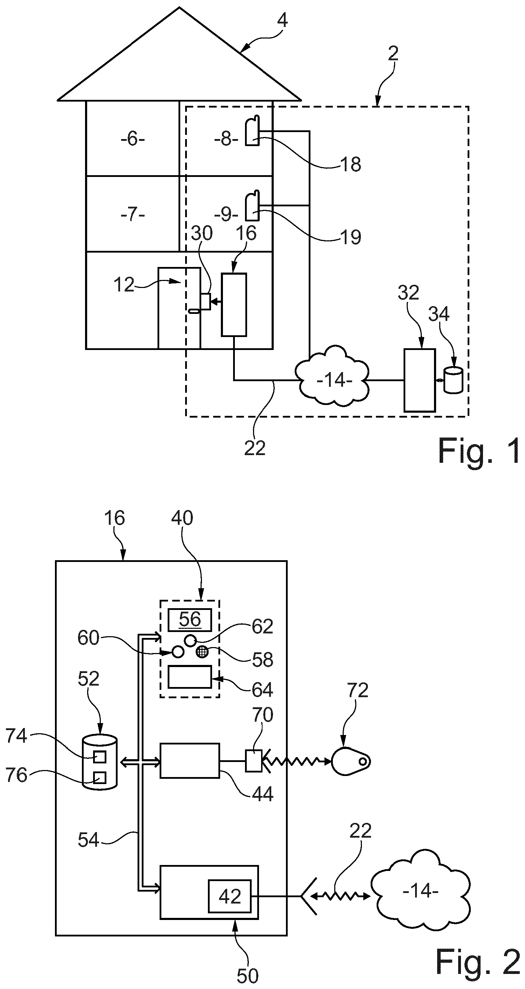

La figure 1 représente un système 2 d'interphonie d'une résidence 4. Par exemple, la résidence 4 est un habitat collectif comportant plusieurs appartements ou logements. A titre d'illustration, ici, la résidence 4 comporte au moins quatre appartements 6, 7, 8 et 9.

La résidence 4 est équipée d'une porte d'accès 12 à la résidence.

Le système 2 permet d'autoriser et, en alternance, d'interdire l'accès à la résidence 4 à un visiteur.

A cet effet, chaque résident de la résidence 4 est équipé d'un combiné audiophonique raccordé, par l'intermédiaire d'un réseau 14 de transmission d'informations, à un interphone 16 situé à proximité de la porte 12. Typiquement, l'interphone 16 est situé à moins de 10 m et, le plus souvent, à moins de 5 m ou 3 m de la porte 12.

Pour simplifier l'illustration, seuls deux combinés audiophoniques 18, 19 ont été représentés. Ces combinés sont, par exemple, des téléphones portables, tels que des smartphones, raccordés au réseau 14 par l'intermédiaire d'une liaison sans-fil. Chaque combiné audiophonique comporte, dans ce mode de réalisation, notamment un microphone, un haut-parleur et un écran.

Le réseau 14 est un réseau de télécommunication sans fil tel qu'un réseau téléphonique public. Plus précisément, typiquement, le réseau 14 est un réseau étendu sans fil plus connu sous le terme de réseau cellulaire ou sous l'acronyme WWAN ("Wireless Wide Area Network").

L'interphone 16 permet à un visiteur, présent devant cet interphone, d'établir une conversation audiophonique avec le résident appelé. A cet effet, l'interphone 16 est raccordé au réseau 14 par l'intermédiaire d'une liaison 22 de transmission d'informations. Cette liaison 22 est également une liaison de transmission d'informations sans-fil.

Le système 2 comprend un mécanisme 30 de verrouillage et, en alternance, de déverrouillage de la porte 12. Ce mécanisme 30 est commandé par l'interphone 16 en réponse à la réception d'une commande de déverrouillage de la porte 12 transmise par l'un des combinés 18 et 19. Ainsi, dans ce mode de réalisation, l'interphone 16 remplit en plus les fonctions d'un portier électrique.

Le système 2 comprend également un serveur 32 raccordé à l'interphone 16 par l'intermédiaire du réseau 14. Par exemple, ce serveur 32 permet de configurer et de commander à distance certaines fonctionnalités de l'interphone 16. A cet effet, le serveur 32 est associé à une mémoire 34 dans laquelle sont enregistrés différents paramètres de configuration de l'interphone 16 comme un identifiant pour chaque résident associé au numéro de téléphone du combiné audiophonique de ce résident.

La figure 2 représente plus en détail un exemple de réalisation de l'interphone 16.

L'interphone 16 comprend :
- une interface homme-machine 40,
- une centrale 44 d'accès propre à autoriser et, en alternance, à interdire l'accès à la résidence 4,
- une unité 50 de commande apte à commander les différents éléments de l'interphone 16,
- une mémoire 52, et
- un bus local 54 de transmission d'informations pour raccorder les uns aux autres les différents éléments de l'interphone 16.

L'interface 40 permet :
- une communication vocale entre un visiteur et un résident,
- la sélection de l'un quelconque des résidents de la résidence 4, et
- l'acquisition de caractères alphanumériques.

Par exemple, l'interface 40 est formée d'un écran 56, de microphones 58, de haut-parleurs 60, d'une caméra 62 et d'un clavier 64.

La centrale d'accès 44 est raccordée à un lecteur 70 de droits d'accès. Dans cet exemple de réalisation, le lecteur 70 est un lecteur de clés à transpondeur. Plus précisément, le lecteur 70 est apte à lire les droits d'accès enregistrés dans une clé 72 à transpondeur et la centrale 44 est configurée pour comparer les droits d'accès lus par le lecteur 70 à des droits d'accès 74 pré-enregistrés dans la mémoire 52. Si les droits d'accès lus par le lecteur 70 correspondent aux droits d'accès 74, la centrale 44 autorise l'accès à la résidence 4 et, pour cela, commande le mécanisme 30 pour déverrouiller la porte 12. La porte 12 peut alors être déplacée dans une position ouverte et la personne qui a présenté la clé peut entrer à l'intérieur de la résidence 4. A l'inverse, si les droits d'accès lus par le lecteur 70 ne correspondent pas aux droits d'accès 74, alors la centrale 44 ne commande pas le déverrouillage de la porte 12 et celle-ci reste verrouillée dans sa position fermée. Par exemple, les droits d'accès 74 comportent une liste d'identifiants de clés autorisées à accéder à l'intérieur de la résidence 4. La centrale 44 déverrouille la porte 12 seulement si l'identifiant de clé lue par le lecteur 70 appartient à cette liste d'identifiants de clés autorisées.

La mémoire 52, en plus des droits d'accès 74, comporte également des paramètres d'appel 76 associés à chaque résident. Ces paramètres d'appel 76 sont utilisés pour sélectionner le résident et pour appeler ce résident sélectionné par l'intermédiaire de la liaison 22. Par exemple, les paramètres d'appels associés à chaque résident sont :
- le nom du résident,
- le numéro de téléphone de son combiné.

De nombreux autres paramètres d'appel sont possibles. Par exemple, pour chaque résident, il est possible de préciser un second numéro de téléphone à composer si le premier numéro correspond à une ligne occupée ou ne répond pas. Ces paramètres d'appel sont des paramètres programmables.

L'unité 50 commande le fonctionnement de chacun des éléments de l'interphone 16. L'unité 50 établit également la liaison 22 avec les combinés 18, 19 et le serveur 32. Pour cela, l'unité 50 comporte un émetteur-récepteur 42 raccordé à une antenne 43 pour établir la liaison 22 avec le réseau 14. Par l'intermédiaire de cette liaison 22, l'unité 50 établit la communication audiophonique entre le visiteur et le combiné du résident sélectionné. De plus, l'unité 50 gère également les interactions avec le serveur 32, notamment, pour mettre à jour les droits d'accès 74 et les paramètres programmables 76 enregistrés dans la mémoire 52.

L'émetteur-récepteur 42 est ici un émetteur-récepteur, par exemple, conforme à au moins l'une des normes suivantes : la norme LTE-M (« Long-Term Evolution for Machine »), l'une des normes de la troisième génération (3G) tel que la norme UMTS ("Universal Mobile Telecommunications System"), l'une des normes de la quatrième génération (4G) tel que la norme LTE-Advanced ("Long Term Evolution - Advanced") et l'une des normes de la cinquième génération (5G).

L'antenne 43 est raccordée à l'émetteur-récepteur 42 par une liaison filaire non représentée sur la figure 2.

La plupart des éléments de l'interphone 16 tels que l'unité de commande 50 et la centrale 44 sont réalisés à partir de microprocesseur électroniques programmables.

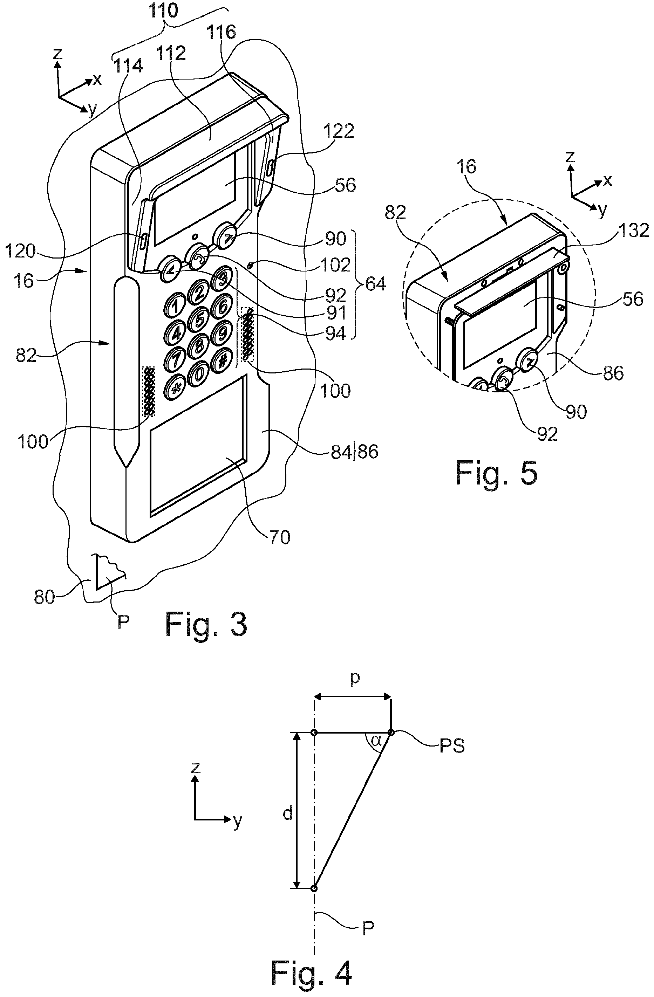

La figure 3 représente l'interphone 16 fixé, sans aucun degré de liberté, sur un mur vertical 80 de la résidence 4. Dans cet exemple de réalisation, l'interphone 16 est monté en applique sur le mur 80. Les figures 3 à 6 sont orientées par rapport à un repère orthogonal XYZ, où la direction Z est la direction verticale et la direction horizontale X est parallèle à la face du mur 80. Par la suite, les termes « au-dessus », « au-dessous », « bas », « haut », « inférieur » et « supérieur » sont définis par rapport à la direction Z. Les termes « avant » et « arrière » sont définis par rapport à la direction Y. Les termes « gauche » et « droite » sont définis par rapport à la direction X.

L'interphone 16 comporte un boîtier 82 sensiblement parallélépipédique. En particulier, le boîtier 82 comporte une face avant 84 directement exposée et accessible depuis l'extérieur de la résidence 4. Cette face avant 84 s'étend principalement dans un plan vertical P. La face avant 84 est la face avant d'une paroi avant 86 du boîtier 82. Cette paroi 86 forme la façade avant de l'interphone 16 qui est directement exposée à l'extérieur de la résidence. Une telle paroi 86 est réalisée en métal de manière à résister aux actes de vandalisme. Par exemple, cette paroi 86 est une plaque en métal de plus de 2 mm ou 3 mm d'épaisseur. Le métal utilisé pour réaliser la paroi 86 est typiquement de l'acier inoxydable, du laiton, de l'aluminium ou du zamak. Ici, l'ensemble du boîtier 82 est réalisé dans le même métal que celui de la paroi 86 et le boîtier 82 ne forme qu'un seul bloc de matière.

Des éléments inaccessibles de l'interphone 16 sont logés à l'intérieur du boîtier 82 de manière à être protégés, notamment, par la paroi 86. Les éléments inaccessibles sont les éléments de l'interphone 16 qui n'ont pas besoin d'être accessibles depuis l'extérieur du boîtier 82 pour être correctement utilisé. En particulier, ces éléments inaccessibles ne sont pas directement accessibles depuis l'extérieur du boîtier 82 par l'intermédiaire d'ouvertures traversantes réalisées dans la paroi 86. L'accès aux éléments inaccessibles de l'interphone 16 n'est possible qu'en ouvrant le boîtier 82 à l'aide d'un outillage spécial. Un tel accès à l'intérieur du boîtier 82 est uniquement prévu pour des opérations de maintenance de l'interphone 16. Cet accès est donc rendu volontairement difficile pour des personnes non habilitées à intervenir sur l'interphone 16. Ici, les éléments inaccessibles de l'interphone 16 sont l'émetteur-récepteur 42, la centrale d'accès 44, l'unité 50 de commande, la mémoire 52 et le bus 54.

A l'inverse, l'interphone 16 comprend aussi des éléments accessibles, c'est-à-dire des éléments qui doivent restés accessibles depuis l'extérieur du boîtier 2 pour pouvoir être utilisés correctement. A cet effet, la paroi 86 comporte des ouvertures traversantes, c'est-à-dire des ouvertures qui traversent toute l'épaisseur de la paroi 86, et les éléments accessibles de l'interphone 16 sont reçus dans ces ouvertures traversantes ou situés immédiatement derrières ces ouvertures traversantes. Ici, les éléments accessibles de l'interphone 16 sont les éléments de l'interface homme-machine 40 et le lecteur 70. Plus précisément, l'écran 56 et les différentes touches du clavier 64 sont reçus dans des ouvertures traversantes respectives de la paroi 86. Plus précisément, le clavier 64 comporte :
- des touches 90, 91 de navigation utilisables par un visiteur pour faire défiler les noms des résidents,
- une touche 92 d'appel pour déclencher un appel vers le combiné audiophonique du résident dont le nom a été sélectionné à l'aide des touches 90, 91, et
- les touches d'un pavé numérique 94 permettant, par exemple, à un aveugle de composer un code d'appel d'un combiné d'un résident.

De part et d'autre du pavé numérique 94, la paroi 86 comporte des ouvertures traversantes 100 derrières lesquelles sont situés les haut-parleurs 60. Ici, chacune de ces ouvertures 100 se présente sous la forme d'une série de troues traversants contiguës les uns aux autres.

A droite du pavé numérique 94, la paroi 86 comporte aussi une ouverture traversante 102 dans laquelle est logé l'objectif de la caméra 62.

Les éléments accessibles de l'interphone 16 sont susceptibles d'être exposés aux intempéries et, en particulier, à la pluie. Ils sont également susceptibles d'êtres exposés à des rayonnements solaires de forte intensité. Ici, les éléments accessibles de l'interphone 16 sont donc conçus pour être résistant à la pluie et, si nécessaire, aux rayonnements solaires. Toutefois, la pluie ou un rayonnement solaire de forte intensité peut gêner l'utilisation de certains des ces éléments accessibles par un visiteur. Ce ou ces éléments accessibles sont alors appelés dans ce texte « éléments à protéger ». Par la suite, la description est faite dans le cas particulier où l'élément à protéger est l'écran 56. L'écran 56 est imperméable (« Waterproof ») de sorte que la présence de gouttes d'eau sur sa surface ne le dégrade pas. Par contre, la présence de ces gouttes d'eau sur la surface de l'écran 56 gêne son utilisation car elles rendent plus difficilement lisibles les informations affichées. De même, un fort rayonnement solaire ne dégrade pas l'écran 56. Par contre, il peut rendre les informations affichées plus difficilement lisibles.

Pour limiter ces inconvénients, l'interphone 16 comporte une visière 110 montée en saillie sur la face avant 84. Cette visière 110 est conformée pour protéger l'écran 56, à minima, contre les gouttes de pluies qui tombent verticalement. A cet effet, dans ce mode de réalisation, la visière 110 comporte un auvent 112 et deux flancs latéraux 114 et 116.

L'auvent 112 est situé au-dessus de l'écran 56 et sa largeur L₁₁₂ est supérieure à la largeur L₅₆ de l'écran 56 et, de préférence, supérieure à 1,05*L₅₆ ou 1,1*L₅₆.

Dans ce texte, la largeur d'un élément de l'interphone 16, tel que l'auvent 112 ou l'écran 56, est égale à la longueur du côté horizontal du rectangle de plus petite surface, contenu dans le plan P, qui contient entièrement la projection orthogonale de cet élément sur le plan P et dont le côté horizontal s'étend parallèlement à la direction X. Les bords inférieur et supérieur de cet élément de l'interphone 16 correspondent aux côtés, respectivement, inférieur et supérieur de ce rectangle de plus petite surface. Les bords latéraux droit et gauche de cet élément correspondent aux côtés, respectivement, droit et gauche de ce rectangle de plus petite surface.

Ici, pour maximiser l'efficacité de l'auvent 112, sa position par rapport à l'écran 56 est telle que la condition (1) suivante est satisfaite : d < p*tan(α), où :
- d est égal à la distance la plus courte qui sépare le bord inférieur de l'écran 56 de la projection orthogonale, sur le plan P, du point PS (Figure 4) de l'auvent 112 le plus en saillie par rapport au plan P,
- p est égal à la profondeur maximale de l'auvent 112, c'est-à-dire égal à la distance la plus courte qui sépare le point PS du plan P,
- α est un angle inférieur à 87° et, de préférence, inférieur à 86° ou 85° ou 82° ou 80° ou 78°, et
- le symbole « * » désigne la multiplication scalaire.

La relation entre les distances d, p et l'angle α est illustrée sur la figure 4.

Généralement, l'angle α est aussi supérieure à 45° ou 55°.

Ici, la distance p est égale à 25 mm et l'angle α est choisi égal à 75°. Ainsi, l'écran 56 se trouve juste en-dessous de l'auvent 112.

Dans ce mode de réalisation, l'auvent 112 est formé d'un plaque parallélépipédique qui est inclinée vers le bas pour évacuer l'eau qui s'écoule sur cet auvent 112 vers l'avant, c'est-à-dire du côté le plus éloigné de la face avant 84. Ici, la profondeur p de l'auvent 56 est donc constante sur toute sa largeur L₁₁₂. Typiquement, la profondeur maximale p est comprise entre 3 mm et 100 mm et, de préférence, entre 15 mm et 70 mm. L'inclinaison entre la face supérieure de l'auvent 112 et un plan horizontal est, par exemple, supérieure à 5° ou 10°. Cette inclinaison est également généralement inférieure à 45°.

Les flancs latéraux 114 et 116 s'étendent principalement le long des bords latéraux, respectivement gauche et droit, de l'écran 56. De préférence, les projections orthogonales des flancs 114 et 116 sur le plan P, s'étendent, en partant de l'auvent 112 et en allant vers le bas, jusqu'à une limite basse qui est située en dessous du bord supérieur de l'écran 56. La distance entre cette limite basse et le bord supérieur de l'écran 56 est supérieure à 0,5*H₅₆, où H₅₆ est la hauteur de l'écran 56. La hauteur H₅₆ est égale à la longueur du bord latéral de l'écran 56. Ici, cette distance est située entre 0,8*H₅₆ et H₅₆.

Dans ce mode de réalisation, la profondeur des flancs 114 et 116 dans la direction Y diminue progressivement en allant de l'auvent 112 vers leur limite basse.

Une cavité, non visible sur les figures, est aménagée à l'intérieur de chacun des flancs 114, 116. Un exemplaire de chacun des microphones 58 est logé à l'intérieur de chacune de ces cavités. Chaque microphone 58 est raccordé à l'unité 50 de commande par l'intermédiaire d'une liaison filaire qui traverse la paroi 86. A cet effet, la paroi 86 comporte des trous traversants masqués par la visière 110. De plus, chacune de ces cavités est en communication fluidique avec l'extérieur par l'intermédiaire d'une trouée. Sur la figure 3, ces trouées portent les références 120 et 122 et sont oblongues. Ces trouées 120, 122 débouchent dans les faces extérieures des flancs 114, 116 dans des régions abritées des gouttes de pluie par la visière 110. Pour cela, ici, les projections orthogonales, sur un plan horizontal, de ces régions où débouchent les trouées 120, 122 sont situées à l'intérieur de la projection orthogonale, dans le même plan horizontal, de l'auvent 112.

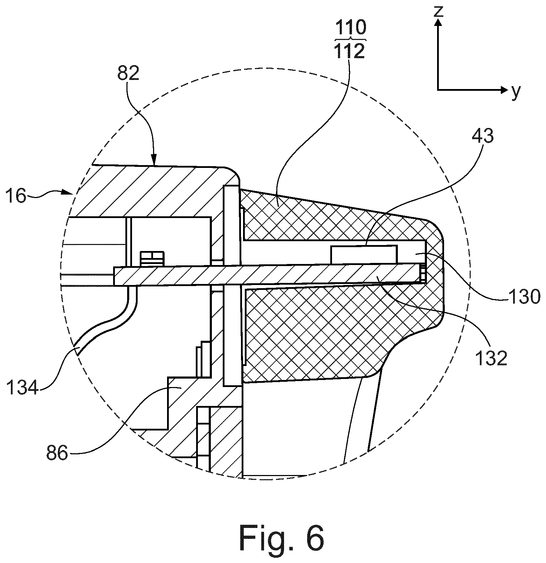

La visière 110 comporte aussi une cavité 130 (Figure 6) pour recevoir une carte 132 (Figures 5 et 6) de circuit imprimé sur laquelle sont montés les différents composants de l'antenne 43.

La visière 110 est rapportée sur la face avant 84. Ici, elle est fixée sans aucun degré de liberté sur cette face avant 84, par exemple, à l'aide de vis.

La visière 110 comporte au moins une portion transparente aux ondes électromagnétiques émises et reçues par l'antenne 43. Cette portion transparente est réalisée dans un matériau transparent aux ondes électromagnétiques utilisées pour établir la liaison 22. La permittivité relative de ce matériau transparent est comprise entre 1 et 5 aux fréquences des ondes émises et reçues par l'antenne 43. Ce matériau transparent est également, généralement, un matériau électriquement isolant, c'est-à-dire un matériau dont la conductivité électrique, à 20°C, est inférieure à 10⁻⁵ S/m et, de préférence, inférieure à 10⁻⁸ S/m. Ici, le matériau transparent est du plastique et la visière 110 est entièrement réalisée en plastique.

La figure 5 représente la partie haute de l'interphone 16 en absence de la visière 110. La figure 6 représente cette même partie haute de l'interphone 16 en présence de la visière 110.

Comme visible sur la figure 6, la cavité 132 est essentiellement parallélépipédique et s'étend principalement dans la direction X à l'intérieur de l'auvent 112. La visière 110 est dépourvue de trouée permettant de relier la cavité 132 à l'extérieur.

Dans ce mode de réalisation, une partie, dite « extérieure », de la carte 132 est reçue à l'intérieur de la cavité 130 et une autre partie, dite « intérieure », est reçue à l'intérieur du boîtier 82. L'antenne 43 est seulement montée sur la partie extérieure de la carte 132. Ainsi, l'antenne 43 est en mesure de recevoir les ondes électromagnétiques de manière bien plus efficace que si elle était logée à l'intérieur du boîtier 82 et donc derrière la paroi 86.

La partie intérieure de la carte 132 comporte une connexion filaire 134 pour raccorder l'antenne 43 à l'émetteur-récepteur 42.

Pour loger la carte 132 en partie à l'extérieur du boîtier 82 et en partie à l'intérieur, la paroi 86 comporte une fente traversante située en vis-à-vis de la cavité 130 lorsque la visière 110 est montée sur la paroi 86.

### Chapitre II :Variantes :

### Variantes de la visière :

La description a été faite dans le cas particulier où l'élément à protéger est l'écran 56. Toutefois, ce qui est décrit dans ce texte s'applique à tout autre élément accessible et à protéger de l'interphone 16. Ainsi, l'élément accessible à protéger peut notamment être l'un quelconque des éléments du groupe suivant :
- l'écran 56,
- le clavier 64,
- les haut-parleurs 60,
- les microphones 58,
- l'objectif de la caméra 62,
- un dispositif d'éclairage de la personne présente devant l'interphone,
- le lecteur 70 de droits d'accès.

En effet, l'utilisation de chacun de ces éléments peut être gênée ou dégradée par la présence, par exemple, de gouttes d'eau sur cet élément ou de gouttes d'eau qui obstrue, au moins partiellement, l'ouverture traversante derrière laquelle il se trouve.

La visière peut aussi être conformée pour protéger non pas un seul élément accessible de l'interphone mais plusieurs des éléments accessibles de l'interphone 16. Par exemple, la visière peut être conformée pour protéger à la fois l'écran 56 et l'objectif de la caméra 62 ou à la fois l'écran 56 et les haut-parleurs 60. Dans ce cas, l'auvent de la visière s'étend au-dessus de plusieurs éléments à protéger choisi dans le groupe ci-dessus.

En variante, l'antenne 43 est logée à l'intérieur des flancs latéraux 114, 116 de la visière et non pas à l'intérieur de l'auvent 112. De façon correspondante, les microphones 58 peuvent être logés à l'intérieur de l'auvent 112 au lieu d'être logés dans les flancs 114, 116.

Dans un autre mode de réalisation, la visière comporte non pas une seule antenne mais plusieurs antennes. Par exemple, en plus de l'antenne 43, la visière comporte aussi une antenne pour établir une liaison sans fil courte distance telle qu'une liaison conforme au standard WiFi, Bluetooth ou NFC (« Near Field Communication »).

En variante, les flancs latéraux de la visière sont raccourcis et s'étendent le long de moins de 50 % des bords latéraux de l'élément à protéger.

Dans une autre variante, la visière comporte un seul flanc latéral.

Dans une variante simplifiée, les flancs latéraux sont omis.

L'angle α peut être supérieur à 87°. Par exemple, l'angle α est choisi égal à 88°.

La visière 110 n'est pas nécessairement entièrement réalisée en plastique. Par exemple, en variante, elle comporte une portion réalisée en plastique et d'autres portions réalisées dans d'autres matériaux. Par exemple, si l'antenne 43 et les microphones 58 sont logés à l'intérieur de l'auvent 112, les flancs latéraux 114 et 116 peuvent être réalisés dans un matériau différent qui n'est pas nécessairement transparent aux ondes électromagnétiques. A l'inverse, si l'antenne 43 et les microphones 58 sont logés dans les flancs latéraux 114, 116, c'est l'auvent 112 qui peut être réalisé dans un autre matériau qui n'est pas nécessairement transparent aux ondes électromagnétiques.

En variante, le plastique est remplacé par un autre matériau transparent aux ondes électromagnétiques émises et reçues par l'antenne 43. Par exemple, le matériau utilisé à la place du plastique est de la résine thermodurcissable ou du bois sec.

### Variantes de l'interphone :

D'autres modes de réalisation de l'antenne 43 sont possibles. Par exemple, en variante, la partie intérieure de la carte 132 est omise de sorte que la carte 132 est entièrement reçue à l'intérieur de la cavité 130.

L'interphone peut comporter plusieurs écrans au lieu d'un seul.

En variante, l'écran 56 est un écran tactile. Dans ce cas, au moins une partie des touches du clavier correspondent à des zones sensibles de contact affichées sur l'écran tactile. Si l'ensemble des touches du clavier sont formées par des zones sensibles de l'écran tactile, alors l'écran et le clavier sont confondus et correspondent à un seul et même élément de l'interphone.

Dans un mode de réalisation simplifié, l'écran 56 est omis. Dans ce cas, typiquement, un porte étiquette est intégré à la face avant 84 et le clavier comporte, associé à chaque étiquette, une touche d'appel. Lorsque l'une de ces touches d'appel est enfoncée, cela déclenche un appel vers le combiné audiophonique du résident identifié par l'inscription figurant sur l'étiquette associée à cette touche d'appel. Dans ce cas, le clavier comporte les touches d'appel et ne comporte pas les touches 90 à 92.

Le nombre de haut-parleurs et de microphones utilisés peut être différent. Par exemple, l'interface homme-machine comporte un seul haut-parleur et un seul microphone.

En variante, les microphones 58 ne sont pas intégrés dans la visière 110. Typiquement, les microphones sont alors logés immédiatement derrière des ouvertures traversantes respectives aménagées dans la paroi métallique 86. Dans ce cas, l'élément à protéger peut aussi être ce ou ces microphones.

Dans un mode de réalisation simplifié, la caméra est omise.

En variante, le pavé numérique 94 est omis. Dans ce cas, le clavier comporte seulement les touches 90 à 92 permettant de sélectionner un résident particulier à l'aide de l'écran 56.

Dans une version simplifiée, le clavier comporte une seule touche d'appel qui, lorsqu'elle est enfoncée, permet d'appeler un résident. L'interphone permet alors d'appeler un seul résident. Par exemple, ce résident est le gardien de la résidence 4.

D'autres modes de réalisation sont possibles pour le lecteur 70 de droits d'accès. Par exemple, le lecteur de droits d'accès peut être choisi dans le groupe constitué d'un lecteur d'étiquettes RFID ("Radio Frequency IDentification"), d'un émetteur-récepteur conforme à la norme Bluetooth, d'un émetteur-récepteur en champ proche, d'un émetteur-récepteur conforme à la norme Zigbee. Un émetteur-récepteur en champ proche est un émetteur-récepteur utilisant une communication en champ proche plus connue sous l'acronyme NFC ("Near Field Communication").

Le lecteur de droits d'accès n'est pas nécessairement un lecteur sans contact. Par exemple, le lecteur 70 peut être remplacé par un lecteur de cartes ou similaires.

Le lecteur 70 peut aussi être remplacé par un lecteur biométrique apte à acquérir une donnée biométrique de la personne présente devant ce lecteur. Dans ce cas, les droits d'accès lus correspondent aux données biométriques acquises. Par exemple, le lecteur biométrique est un lecteur d'empreintes digitales ou un lecteur d'iris.

L'interphone peut aussi comporter plusieurs lecteurs de droits d'accès différents. A l'inverse, dans un mode de réalisation simplifié, l'interphone est dépourvu de lecteur de droits d'accès.

L'interphone peut aussi être encastré dans un mur. Dans ce cas, les éléments inaccessibles de l'interphone sont logés à l'intérieur d'une niche creusée dans le mur. La paroi avant obstrue alors complètement l'ouverture de cette niche. Dans un tel cas, l'interphone ne comporte pas nécessairement un boîtier mais seulement une paroi avant qui obstrue la niche.

### Autres Variantes:

Les combinés audiophoniques ne sont pas nécessairement des téléphones portables. Dans les faits, un combiné audiophonique peut être tout équipement raccordé au réseau 14 et équipé d'une interface homme-machine permettant d'établir la communication vocale avec le visiteur. Par exemple, un combiné audiophonique peut aussi être un ordinateur tel qu'un ordinateur portable.

Le système 2 d'interphonie ne comporte pas nécessairement de serveur tel que le serveur 32. Dans ce cas les fonctionnalités du serveur 32 sont directement intégrées dans l'interphone 16.

La résidence 4 peut aussi être un habitat individuel telle qu'une maison où tout autre endroit dont l'accès est contrôlé à l'aide d'un interphone.

Plusieurs des variantes décrites ci-dessus peuvent être combinées dans un même mode de réalisation.

Le fait de loger le ou les microphone de l'interphone 16 à l'intérieur d'une portion de la visière 110 peut être mis en œuvre indépendamment du fait de loger l'antenne 43 à l'intérieur de cette même visière.

### Chapitre III : Avantages des modes de réalisation décrits :

Le fait que la même visière soit à la fois utilisée pour protéger l'un des éléments de l'interphone contre les intempéries et pour recevoir et protéger l'antenne 43 simplifie la réalisation de l'interphone. En effet, il n'est alors pas nécessaire de prévoir sur l'une des faces extérieure de l'interphone, une saillie supplémentaire pour recevoir et protéger l'antenne. De plus, lorsque l'antenne 43 est intégrée à l'intérieur d'une portion de la visière 110, cela facilite la réception des ondes électromagnétiques et donc simplifie et améliore le fonctionnement de cette antenne 43 par rapport au cas où elle serait située derrière la paroi métallique 86. Cela permet aussi d'utiliser une plus grande diversité d'antennes, ce qui facilite aussi la réalisation de l'interphone. Enfin, bien qu'en étant situé du côté extérieur de la face avant 84, l'antenne 43 est particulièrement bien dissimulée, ce qui rend plus difficile les tentatives de dégradation. En effet, un vandale ne peut pas identifier facilement la position de l'antenne, ce qui rend plus difficile les tentatives pour l'endommager.

Le fait d'intégrer le microphone dans la visière permet de le découpler acoustiquement de la caisse de résonance formée par la paroi métallique 86. Cela améliore donc son fonctionnement.

Le fait que la visière comporte en plus des flancs latéraux permet d'améliorer la protection de l'élément à protéger contre les intempéries et la lumière.

Le fait que l'élément à protéger soit entièrement situé à moins de p*tan(α) du point le plus en saillie de l'auvent 112 permet de le protéger plus efficacement contre, notamment, la présence de gouttes de pluie sur sa surface et/ou l'obstruction de l'ouverture traversante derrière laquelle il est situé par des gouttes de pluie.

Le fait de choisir l'élément à protéger parmi l'écran 56, le clavier 64, les microphones 58, les haut-parleurs 60 et l'objectif de la caméra 62 améliore l'utilisation de l'interphone 16 car ces éléments sont ceux dont l'utilisation est la plus susceptible d'être dégradée par la présence de gouttes d'eau sur leur surface ou par la présence de gouttes d'eau qui obstruent, au moins partiellement, l'ouverture traversante derrière laquelle ils sont situés.

Le fait de choisir l'élément à protéger parmi l'écran 56 et le clavier 64, permet d'augmenter les dimensions de la visière 110 et donc de loger une antenne de taille plus importante sur la face avant 84 de l'interphone. Le fait d'avoir la possibilité d'utiliser une antenne de taille plus importante sans pour autant augmenter le risque qu'elle soit dégradée par des actes de vandalisme, simplifie la réalisation de l'interphone car cela limite les contraintes techniques sur les dimensions possibles pour l'antenne.

## Revendications

1. Interphone pour une résidence comportant :
- une interface homme-machine (40) permettant à un visiteur de sélectionner un résident de la résidence et de communiquer avec le résident sélectionné par l'intermédiaire d'un réseau de télécommunication sans-fil, cette interface homme-machine comportant à cet effet les éléments suivants :
- un écran (56) et/ou un clavier (64) pour permettre la sélection d'un résident par un visiteur présent devant l'interphone, et
- un haut-parleur (60) et un microphone (58) pour communiquer verbalement avec le résident sélectionné,
- une antenne (43) pour établir une liaison sans-fil (22) entre l'interphone et un combiné audiophonique du résident sélectionné,
- une unité électronique (50) de commande comportant un émetteur-récepteur (42) raccordé à l'antenne et aux éléments de l'interface homme-machine, cette unité électronique de commande étant configurée pour :
- à l'aide de l'écran et/ou du clavier, permettre la sélection d'un résident par le visiteur,
- à l'aide de l'émetteur-récepteur, de l'antenne, du microphone et du haut-parleur, établir une communication vocale, à travers le réseau de communication sans-fil, entre le visiteur et le combiné audiophonique du résident sélectionné,
- commander le déverrouillage d'une porte en réponse à une commande de déverrouillage transmise par le combiné audiophonique du résident sélectionné,
- une paroi métallique (86) présentant une face avant (84) destinée à être tournée vers le visiteur, l'unité électronique de commande étant située derrière cette paroi métallique pour la protéger des actes de vandalisme, la face avant de cette paroi métallique s'étendant principalement dans un plan (P) de la paroi,
- au moins un élément (56) à protéger contre les intempéries, cet élément à protéger étant reçu dans une ouverture traversant la paroi métallique ou situé immédiatement derrière une telle ouverture traversante pour permettre son utilisation par une personne présente devant l'interphone,
- une visière (110) de protection comportant un auvent (112) apte à protéger l'élément à protéger contre les gouttes de pluie qui tombent verticalement, cette visière étant montée en saillie sur la face avant de la paroi métallique et l'auvent étant situé au-dessus de l'élément à protéger,
**caractérisé en ce que** :
- la visière (110) comporte au moins une portion transparente aux ondes électromagnétiques émises et reçues par l'antenne, cette portion transparente étant réalisée dans un matériau dont la permittivité relative est comprise entre 1 et 5, et
- l'antenne (43) est intégrée à l'intérieur de cette portion transparente de la visière de sorte que la paroi métallique ne fait pas obstacle à la réception des ondes.

2. Interphone selon la revendication 1, dans lequel le microphone (58) est également intégré à l'intérieur de cette portion transparente de la visière.

3. Interphone selon la revendication 2, dans lequel le microphone (58) est reçu à l'intérieur d'une cavité aménagée dans la portion transparente de la visière et la visière comporte une trouée (120, 122) qui relie fluidiquement cette cavité à l'extérieur, cette trouée débouchant dans une région de la face extérieure de la visière qui est à l'abri des gouttes de pluie qui tombent verticalement lorsque l'interphone est monté sur un mur vertical.

4. Interphone selon l'une quelconque des revendications précédentes, dans lequel la visière (110) comporte également au moins un flanc latéral (114, 116) qui s'étend le long d'au moins 50 % d'un bord latéral de l'élément (56) à protéger, les bords latéraux de l'élément à protéger correspondant aux côtés verticaux du rectangle de plus petite surface, contenu dans le plan de la paroi, qui contient entièrement la projection orthogonale de l'élément à protéger sur le plan de la paroi et dont les côtés verticaux s'étendent verticalement lorsque l'interphone est monté sur un mur vertical.

5. Interphone selon l'une quelconque des revendications précédentes, dans lequel la position de l'élément (56) à protéger par rapport à la visière (110) satisfait la condition suivante : d < p * tan(α), où :
- d est égal à la distance la plus courte qui sépare le bord inférieur horizontal de l'élément (56) à protéger de la projection orthogonale, sur le plan de la paroi, du point (PS) de l'auvent (112) le plus en saillie par rapport au plan de la paroi, le bord inférieur horizontal de l'élément à protéger correspondant au côté inférieur du rectangle de plus petite surface, contenu dans le plan de la paroi, qui contient entièrement la projection orthogonale de l'élément à protéger sur le plan de la paroi et dont le côté inférieur s'étend horizontalement lorsque l'interphone est monté sur un mur vertical,
- p est égal à la distance la plus courte qui sépare le point (PS) de l'auvent le plus en saillie, du plan de la paroi,
- α est un angle inférieur à 87° et, de préférence, inférieur à 86° ou 85° ou 82°.

6. Interphone selon l'une quelconque des revendications précédentes, dans lequel l'élément à protéger est choisi dans le groupe constitué :
- de l'écran (56) et/ou du clavier (64) de l'interface homme-machine,
- du haut-parleur (60) de l'interface homme-machine,
- du microphone (58) de l'interface homme-machine,
- de l'objectif d'une caméra (62) apte à filmer le visiteur présent devant l'interphone,
- d'un dispositif d'éclairage de la personne présente devant l'interphone, et
- d'un lecteur (70) apte à lire des droits d'accès présentés devant la paroi métallique et à les transmettre à une centrale (44) d'accès pour autoriser et, en alternance, interdire le déverrouillage de la porte.

7. Interphone selon la revendication 6, dans lequel l'élément à protéger est choisi dans le groupe constitué de l'écran (56) de l'interface homme-machine, du clavier (64) de l'interface homme-machine, du haut-parleur (60) de l'interface homme-machine, du microphone (58) de l'interface homme-machine et de l'objectif de la caméra (62) apte à filmer le visiteur présent devant l'interphone.

8. Interphone selon la revendication 7, dans lequel l'élément à protéger est l'écran (56) et/ou le clavier (64) de l'interface homme-machine.

9. Interphone selon l'une quelconque des revendications précédentes, dans lequel la largeur de l'auvent (112) est supérieure ou égale à la largeur de l'élément (56) à protéger, la largeur d'un élément de l'interphone, tel que l'auvent ou l'élément à protéger, étant égale à la longueur du côté horizontal du rectangle de plus petite surface, contenu dans le plan de la paroi, qui contient entièrement la projection orthogonale de cet élément sur le plan de la paroi et dont le côté horizontal s'étend horizontalement lorsque l'interphone est monté sur un mur vertical.

10. Interphone selon l'une quelconque des revendications précédentes, dans lequel :
- l'interphone comporte la caméra (62) équipée de l'objectif apte à filmer le visiteur présent devant l'interphone,
- l'unité électronique (50) de commande est apte à transmettre les images filmées par la caméra au combiné audiophonique du résident sélectionné.

## Patentansprüche

1. Gegensprechanlage für eine Wohnanlage mit:
- eine Mensch-Maschine-Schnittstelle (40), die es einem Besucher ermöglicht, einen Bewohner der Wohnung auszuwählen und über ein drahtloses Telekommunikationsnetz mit dem ausgewählten Bewohner zu kommunizieren, wobei diese Mensch-Maschine-Schnittstelle zu diesem Zweck die folgenden Elemente umfasst:
- einen Bildschirm (56) und/oder eine Tastatur (64), um einem vor der Gegensprechanlage anwesenden Besucher die Auswahl eines Bewohners zu ermöglichen, und
- einen Lautsprecher (60) und ein Mikrofon (58) zur verbalen Kommunikation mit dem ausgewählten Bewohner,
- eine Antenne (43) zum Herstellen einer drahtlosen Verbindung (22) zwischen der Gegensprechanlage und einem Audiotelefon des ausgewählten Bewohners,
- eine elektronische Steuereinheit (50) mit einem Sender-Empfänger (42), der mit der Antenne und den Elementen der Mensch-Maschine-Schnittstelle verbunden ist, wobei diese elektronische Steuereinheit so konfiguriert ist, dass sie:
- mithilfe des Bildschirms und/oder der Tastatur die Auswahl eines Bewohners durch den Besucher zu ermöglichen,
- mithilfe des Sende-Empfängers, der Antenne, des Mikrofons und des Lautsprechers eine Sprachkommunikation über das drahtlose Kommunikationsnetz zwischen dem Besucher und dem Audiogerät des ausgewählten Bewohners herzustellen,
- die Türentriegelung als Reaktion auf einen Entriegelungsbefehl, der über das Audiogerät des ausgewählten Bewohners übermittelt wird, zu steuern,
- eine Metallwand (86) mit einer dem Besucher zugewandten Vorderseite (84), wobei die elektronische Steuereinheit hinter dieser Metallwand angeordnet ist, um sie vor Vandalismus zu schützen, und sich die Vorderseite dieser Metallwand hauptsächlich in einer Ebene (P) der Wand erstreckt,
- mindestens ein vor Witterungseinflüssen zu schützendes Element (56), wobei dieses zu schützende Element in einer die Metallwand durchsetzenden Öffnung aufgenommen ist oder unmittelbar hinter einer solchen durchsetzenden Öffnung angeordnet ist, um seine Verwendung durch eine vor der Gegensprechanlage anwesende Person zu ermöglichen,
- eine Schutzblende (110) mit einem Schutzdach (112), das das zu schützende Element vor senkrecht fallenden Regentropfen schützen kann, wobei diese Schutzblende an der Vorderseite der Metallwand hervorstehend angebracht ist und das Schutzdach über dem zu schützenden Element angeordnet ist,
**dadurch gekennzeichnet, dass**:
- das Visier (110) mindestens einen für die von der Antenne ausgesendeten und empfangenen elektromagnetischen Wellen transparenten Abschnitt aufweist, wobei dieser transparente Abschnitt aus einem Material mit einer relativen Permittivität zwischen 1 und 5 besteht, und
- die Antenne (43) in diesen transparenten Abschnitt des Visiers integriert ist, so dass die Metallwand den Empfang der Wellen nicht behindert.

2. Gegensprechanlage nach Anspruch 1, wobei das Mikrofon (58) ebenfalls in diesen transparenten Teil des Visiers integriert ist.

3. Gegensprechanlage nach Anspruch 2, wobei das Mikrofon (58) in einem Hohlraum im transparenten Teil des Visiers aufgenommen ist und das Visier eine Öffnung (120, 122) aufweist, die diesen Hohlraum mit der Außenwelt verbindet, wobei diese Öffnung in einen Bereich der Außenseite des Visiers mündet, der vor senkrecht fallenden Regentropfen geschützt ist, wenn die Gegensprechanlage an einer senkrechten Wand montiert ist.

4. Sprechanlage nach einem der vorstehenden Ansprüche, wobei das Visier (110) außerdem mindestens eine Seitenwand (114, 116) aufweist, die sich entlang mindestens 50 % einer Seitenkante des zu schützenden Elements (56) erstreckt, wobei die Seitenkanten des zu schützenden Elements den vertikalen Seiten des Rechtecks mit der kleinsten Fläche entsprechen, das in der Wandebene enthalten ist, die die orthogonale Projektion des zu schützenden Elements auf die Wandebene vollständig enthält und deren vertikale Seiten sich vertikal erstrecken, wenn die Gegensprechanlage an einer senkrechten Wand angebracht ist.

5. Sprechanlage nach einem der vorstehenden Ansprüche, wobei die Position des zu schützenden Elements (56) in Bezug auf die Blende (110) die folgende Bedingung erfüllt: d < p * tan(α), wobei:
- d ist gleich dem kürzesten Abstand zwischen der unteren horizontalen Kante des zu schützenden Elements (56) und der orthogonalen Projektion auf die Wandebene des Punktes (PS) des Vorsprungs (112), der am weitesten aus der Wandebene herausragt, der unteren horizontalen Kante des zu schützenden Elements, die der Unterseite des Rechtecks mit der kleinsten Fläche entspricht, das in der Wandebene enthalten ist, die die orthogonale Projektion des zu schützenden Elements auf die Wandebene vollständig enthält und deren Unterseite sich horizontal erstreckt, wenn die Gegensprechanlage an einer senkrechten Wand montiert ist,
- p ist gleich dem kürzesten Abstand zwischen dem Punkt (PS) der am weitesten vorstehenden Überdachung und der Wandfläche,
- α ist ein Winkel, der kleiner als 87° und vorzugsweise kleiner als 86° oder 85° oder 82° ist.

6. Sprechanlage nach einem der vorstehenden Ansprüche, wobei das zu schützende Element aus der Gruppe ausgewählt ist, die besteht aus:
- dem Bildschirm (56) und/oder der Tastatur (64) der Mensch-Maschine-Schnittstelle,
- dem Lautsprecher (60) der Mensch-Maschine-Schnittstelle,
- dem Mikrofon (58) der Mensch-Maschine-Schnittstelle,
- der Linse einer Kamera (62), die den vor der Gegensprechanlage anwesenden Besucher filmen kann,
- einer Beleuchtungseinrichtung für die vor der Gegensprechanlage anwesende Person und
- einem Lesegerät (70), das vor der Metallwand vorgezeigte Zugangsrechte lesen und an eine Zugangszentrale (44) übertragen kann, um die Entriegelung der Tür zu genehmigen oder zu sperren.

7. Gegensprechanlage nach Anspruch 6, wobei das zu schützende Element aus der Gruppe ausgewählt ist, die aus dem Bildschirm (56) der Mensch-Maschine-Schnittstelle, der Tastatur (64) der Mensch-Maschine-Schnittstelle, dem Lautsprecher (60) der Mensch-Maschine-Schnittstelle, dem Mikrofon (58) der Mensch-Maschine-Schnittstelle und der Kamera (62), die den vor der Gegensprechanlage stehenden Besucher filmen kann.

8. Gegensprechanlage nach Anspruch 7, wobei das zu schützende Element der Bildschirm (56) und/oder die Tastatur (64) der Mensch-Maschine-Schnittstelle ist.

9. Sprechanlage nach einem der vorstehenden Ansprüche, wobei die Breite des Schutzdachs (112) größer oder gleich der Breite des zu schützenden Elements (56) ist, wobei die Breite eines Elements der Gegensprechanlage, wie beispielsweise der Überdachung oder des zu schützenden Elements, gleich der Länge der horizontalen Seite des Rechtecks mit der kleinsten Fläche ist, das in der Ebene der Wand enthalten ist, die die orthogonale Projektion dieses Elements auf die Ebene der Wand vollständig enthält und deren horizontale Seite sich horizontal erstreckt, wenn die Gegensprechanlage an einer vertikalen Wand montiert ist.

10. Gegensprechanlage nach einem der vorstehenden Ansprüche, wobei:
- die Gegensprechanlage die Kamera (62) umfasst, die mit dem Objektiv ausgestattet ist, das den vor der Gegensprechanlage anwesenden Besucher filmen kann,
- die elektronische Steuereinheit (50) die von der Kamera aufgenommenen Bilder an das Audiogerät des ausgewählten Bewohners übertragen kann.

## Claims

1. Intercom for a residence comprising:
- a human-machine interface (40) allowing a visitor to select a resident of the residence and to communicate with the selected resident via a wireless telecommunications network, this human-machine interface comprising for this purpose the following elements:
- a screen (56) and/or a keypad (64) to enable a visitor standing in front of the intercom to select a resident, and
- a loudspeaker (60) and a microphone (58) for communicating verbally with the selected resident,
- an antenna (43) for establishing a wireless link (22) between the intercom and an audio handset of the selected resident,
- an electronic control unit (50) comprising a transceiver (42) connected to the antenna and to the human-machine interface elements, this electronic control unit being configured to:
- using the screen and/or keyboard, allow the visitor to select a resident,
- using the transceiver, antenna, microphone and loudspeaker, establish voice communication via the wireless communication network between the visitor and the audio handset of the selected resident,
- control the unlocking of a door in response to an unlocking command transmitted by the selected resident's audio handset,
- a metal wall (86) with a front face (84) intended to face the visitor, the electronic control unit being located behind this metal wall to protect it from vandalism, the front face of this metal wall extending mainly in a plane (P) of the wall,
- at least one element (56) to be protected from the weather, this element to be protected being received in an opening through the metal wall or located immediately behind such a through opening to allow its use by a person present in front of the intercom,
- a protective visor (110) comprising a canopy (112) capable of protecting the element to be protected against vertically falling raindrops, this visor being mounted so as to project from the front face of the metal wall and the canopy being located above the element to be protected,
**characterised in that**:
- the visor (110) comprises at least one portion transparent to electromagnetic waves emitted and received by the antenna, this transparent portion being made of a material whose relative permittivity is between 1 and 5, and
- the antenna (43) is integrated inside this transparent portion of the visor so that the metal wall does not obstruct the reception of the waves.

2. Intercom according to claim 1, wherein the microphone (58) is also integrated inside this transparent portion of the visor.

3. Intercom according to claim 2, wherein the microphone (58) is received inside a cavity formed in the transparent portion of the visor and the visor has an opening (120, 122) which fluidically connects this cavity to the outside, said opening opening into a region of the outer face of the visor which is protected from vertically falling raindrops when the intercom is mounted on a vertical wall.

4. Intercom according to any of the preceding claims, wherein the visor (110) also comprises at least one side flank (114, 116) extending along at least 50% of a side edge of the element (56) to be protected, the side edges of the element to be protected corresponding to the vertical sides of the rectangle with the smallest area, contained in the plane of the wall, which completely contains the orthogonal projection of the element to be protected onto the plane of the wall and whose vertical sides extend vertically when the intercom is mounted on a vertical wall.

5. Intercom according to any of the preceding claims, wherein the position of the element (56) to be protected relative to the visor (110) satisfies the following condition: d < p * tan(α), where:
- d is equal to the shortest distance between the horizontal lower edge of the element (56) to be protected and the orthogonal projection, on the wall plane, of the point (PS) of the canopy (112) that protrudes furthest from the wall plane, the horizontal lower edge of the element to be protected corresponding to the lower side of the smallest rectangle, contained in the plane of the wall, which completely contains the orthogonal projection of the element to be protected on the plane of the wall and whose lower side extends horizontally when the intercom is mounted on a vertical wall,
- p is equal to the shortest distance between the point (PS) of the most protruding canopy and the plane of the wall,
- α is an angle less than 87° and, preferably, less than 86° or 85° or 82°.

6. Intercom according to any of the preceding claims, wherein the element to be protected is selected from the group consisting of:
- the screen (56) and/or the keyboard (64) of the human-machine interface,
- the loudspeaker (60) of the human-machine interface,
- the microphone (58) of the human-machine interface,
- the lens of a camera (62) capable of filming the visitor present in front of the intercom,
- a device for illuminating the person in front of the intercom, and
- a reader (70) capable of reading access rights presented in front of the metal wall and transmitting them to an access control unit (44) to authorise and, alternatively, prohibit the unlocking of the door.

7. Intercom according to claim 6, wherein the element to be protected is selected from the group consisting of the screen (56) of the human-machine interface, the keyboard (64) of the human-machine interface, the loudspeaker (60) of the human-machine interface, the microphone (58) of the human-machine interface and the camera lens (62) capable of filming the visitor present in front of the intercom.

8. Intercom according to claim 7, wherein the element to be protected is the screen (56) and/or the keyboard (64) of the human-machine interface.

9. Intercom according to any of the preceding claims, wherein the width of the canopy (112) is greater than or equal to the width of the element (56) to be protected, the width of an element of the intercom, such as the canopy or the element to be protected, being equal to the length of the horizontal side of the rectangle with the smallest area, contained in the plane of the wall, which completely contains the orthogonal projection of this element onto the plane of the wall and whose horizontal side extends horizontally when the intercom is mounted on a vertical wall.

10. Intercom according to any of the preceding claims, wherein:
- the intercom comprises the camera (62) equipped with the lens capable of filming the visitor present in front of the intercom,
- the electronic control unit (50) is capable of transmitting the images filmed by the camera to the audio handset of the selected resident.
